# EUROPEAN PATENT APPLICATION

(11) **EP 4 800 532 A1**
(43) Date of publication of application: **02.09.2026**
(21) Application number: 25192712.5
(22) Date of filing: 30.07.2025
(51) Int. Cl.: G06F 3/048, G06F 16/738, G06F 16/783, G06V 20/40

(54) **INTERFACE DISPLAY METHOD, APPARATUS, TERMINAL DEVICE, STORAGE MEDIUM AND PRODUCT**

(30) Priority: 27.02.2025 CN 202510229308
(71) Applicant: Beijing Xiaomi Mobile Software Co., Ltd., Beijing 100085 (CN)
(72) Inventor: LIU, Jingchao, Beijing, 100085 (CN); JIA, Xueen, Beijing, 100085 (CN); WANG, Qiang, Beijing, 100085 (CN); FENG, Wenbo, Beijing, 100085 (CN); LIAN, Xiaozhuang, Beijing, 100085 (CN); XU, Pengpeng, Beijing, 100085 (CN)
(74) Representative: Dehns Germany Partnerschaft mbB

(57) **Abstract**

The present disclosure relates to an interface display method, apparatus, terminal device, storage medium, and product. The method includes: acquiring a trigger instruction for search information on a first interface, and displaying a second interface, where the second interface includes at least one first multimedia resource related to the search information; detecting a trigger operation on a second multimedia resource in the at least one first multimedia resource, and in response to detecting the trigger operation, displaying a play interface for the second multimedia resource, where the playback interface includes a progress bar segment with a preset mark, and the progress bar segment is used to indicate the start and end play time for the media content indicated by the search information in the second multimedia resource. The method can shorten the time it takes for the user to watch the required media content.

## Description

### TECHNICAL FIELD

The present disclosure relates to the field of electronic technology, and in particular to an interface display method, apparatus, terminal device, storage medium and product.

### BACKGROUND

With the popularity of self-media, the number of multimedia resources such as video resources and music resources that may be played on various applications is increasing rapidly. In view of this, users may acquire the required audio and video content by entering search terms in the search box of the application.

However, only a small number of clips in some audio resources and/or video resources are related to the audio and video content that users need to watch. At this time, if users watch the entire audio resource and/or video resource to find the required audio and video content, it will waste a lot of time.

### SUMMARY

In order to overcome the problems existing in the related art, the present disclosure provides an interface display method, apparatus, terminal device, storage medium and product, which can shorten the time for users to watch the required media content.

According to a first aspect of the embodiments of the present disclosure, an interface display method is provided, which includes: acquiring a trigger instruction for search information on a first interface, and displaying a second interface, where the second interface includes at least one first multimedia resource related to the search information; detecting a trigger operation on a second multimedia resource in the at least one first multimedia resource; and in response to detecting the trigger operation, displaying a play interface for the second multimedia resource, where the play interface includes a progress bar segment with a preset mark, and the progress bar segment is used to indicate the start and end play time of the media content indicated by the search information in the second multimedia resource.

In some embodiments, acquiring the trigger instruction for the search information on the first interface includes: starting the first interface in response to the first operation; and acquiring the trigger instruction for the search information in the first interface.

In some embodiments, the first interface includes a search box, and acquiring the trigger instruction for the search information in the first interface includes: receiving the search information input by the user on the search box; and acquiring the trigger instruction for the search information.

In some embodiments, the first interface includes historical search information, and acquiring the trigger instruction for the search information in the first interface includes: in response to the trigger operation on the historical search information by the user, using the historical search information as the trigger instruction.

In some embodiments, the second interface includes a plurality of first controls, where different first controls correspond to different types of multimedia resources. The method further includes: in response to triggering the target first control, displaying a third interface, where the third interface includes at least one third multimedia resource of the type corresponding to the target first control, and at least one third multimedia resource includes the first multimedia resource of the type corresponding to the target first control. Detecting the trigger operation on the second multimedia resource in the at least one first multimedia resource includes: detecting the trigger operation on the second multimedia resource in the at least one third multimedia resource.

In some embodiments, the second interface includes a plurality of first display areas, where different first display areas are used to display different types of first multimedia resources.

In some embodiments, the second interface includes a second display area, where the second display area is used to display the first multimedia resource, in the at least one first multimedia resource, having the highest first match degree with the search information.

In some embodiments, the media content indicated by the search information is at least one second media segment. Before displaying the play interface, the method further includes: acquiring a plurality of second media segments obtained by dividing the second multimedia resource; and determining, from the plurality of second media segments, at least one first media segment with the content indicated by the search information.

In some embodiments, determining, from the plurality of second media segments, the at least one first media segment with the content indicated by the search information includes: calculating the second match degree between each second media segment in the plurality of second media segments and the search information; and determining the at least one first media segment from the plurality of second media segments based on the second match degree corresponding to each second media segment.

In some embodiments, calculating the second match degree between each second media segment in the plurality of second media segments and the search information includes: vectorizing the search information to obtain a first vector; and calculating the second match degree between the second vector corresponding to each second media segment and the first vector, where the second vector corresponding to each second media segment is obtained by vectorizing each second media segment.

In some embodiments, the plurality of second media segments is a plurality of video segments, and the second vector is obtained by vectorizing the target image in each video segment of the plurality of video segments.

In some embodiments, the plurality of second media segments is a plurality of audio segments, and the second vector is obtained by vectorizing the text representation of the plurality of audio segments. The text representation of the audio segment is obtained by textualizing the audio segment.

In some embodiments, the plurality of second media segments is a plurality of audio segments, and calculating the second match degree between each second media segment of the plurality of second media segments and the search information includes: acquiring the search information in a text form; and calculating the second match degree between the text representation of each audio segment of the plurality of audio segments and the search information in the text form. The text representation of each audio segment is obtained by textualizing each audio segment.

In some embodiments, determining, from the plurality of second media segments, at least one first media segment with the content indicated by the search information includes: determining, from the plurality of second media segments, multiple adjacent second media segments having a similarity greater than a first threshold value as a third media segment; calculating the third match degree between the first vector and the second vector corresponding to a second media segment included in the third media segment, where the first vector is obtained by vectorizing the search information; and in response to the third match degree being greater than or equal to the second threshold value, determining the plurality of second media segments included in the third media segment as the first media segment.

In some embodiments, the plurality of second media segments includes a plurality of video segments and an audio segment corresponding to each of the plurality of video segments. Determining, from the plurality of second media segments, at least one first media segment with the content indicated by the search information includes: determining, from the plurality of video segments, an alternative video segment with the content indicated by the search information; determining whether the audio segment corresponding to the alternative video segment has the content indicated by the search information; and in response to the audio segment corresponding to the alternative video segment having the content indicated by the search information, determining the alternative video segment as the first media segment.

According to a second aspect of the embodiments of the present disclosure, an interface display apparatus is provided, comprising: a first display module, configured to acquire a trigger instruction for the search information on the first interface, and display a second interface, where the second interface includes at least one first multimedia resource related to the search information; a detection module, configured to detect a trigger operation on a second multimedia resource in the at least one first multimedia resource; and a second display module, configured to display a play interface for the second multimedia resource in response to detecting the trigger operation. The play interface includes a progress bar segment having a preset mark. The progress bar segment is used to indicate the start and end play time of the media content indicated by the search information in the second multimedia resource.

In some embodiments, the first display module is configured to: start the first interface in response to the first operation; and acquire the trigger instruction for the search information in the first interface.

In some embodiments, the first interface includes a search box, and the first display module is configured to: receive the search information input by the user on the search box, and acquire the trigger instruction for the search information.

In some embodiments, the first interface includes historical search information, and the first display module is configured to: in response to the trigger operation on the historical search information by the user, use the historical search information as the trigger instruction.

In some embodiments, the second interface includes a plurality of first controls, and different first controls correspond to different types of multimedia resources. The apparatus further includes: a third display module, configured to display a third interface in response to triggering the target first control, where the third interface includes at least one third multimedia resource of the type corresponding to the target first control, and the at least one third multimedia resource includes the first multimedia resource of the type corresponding to the target first control; and a detection module, configured to detect the trigger operation on the second multimedia resource in the at least one third multimedia resource.

In some embodiments, the second interface includes a plurality of first display areas, and different first display areas are used to display different types of first multimedia resources.

In some embodiments, the second interface includes a second display area, and the second display area is used to display the first multimedia resource, among the at least one first multimedia resource, having the highest first match degree with the search information.

In some embodiments, the media content indicated by the search information is at least one second media segment. Before displaying the play interface, the apparatus further includes: an acquisition module, configured to acquire a plurality of second media segments obtained by dividing the second multimedia resource; and a determination module, configured to determine, from the plurality of second media segments, at least one first media segment with the content indicated by the search information.

In some embodiments, the determination module is configured to: calculate the second match degree between each second media segment in the plurality of second media segments and the search information; and determine at least one first media segment from the plurality of second media segments based on the second match degree corresponding to each second media segment.

In some embodiments, the determination module is configured to: vectorize the search information to obtain a first vector; and calculate the second match degree between the second vector corresponding to each second media segment and the first vector; where the second vector corresponding to each second media segment is obtained by vectorizing each second media segment.

In some embodiments, the plurality of second media segments is a plurality of video segments, and the second vector is obtained by vectorizing the target image in each of the plurality of video segments.

In some embodiments, the plurality of second media segments is a plurality of audio segments, the second vector is obtained by vectorizing the text representation of the plurality of audio segments, and the text representation of the audio segment is obtained by textualizing the audio segment.

In some embodiments, the plurality of second media segments is a plurality of audio segments. The determination module is configured to: acquire the search information in a text form; and calculate the second match degree between the text representation of each of the plurality of audio segments and the search information in the text form. The text representation of each audio segment is obtained by textualizing each audio segment.

In some embodiments, the determination module is configured to: determine multiple adjacent second media segments, among the plurality of second media segments, having a similarity greater than the first threshold value as a third media segment; calculate the third match degree between the first vector and the second vector corresponding to a second media segment included in the third media segment, where the first vector is obtained by vectorizing the search information; and in response to the third match degree being greater than or equal to the second threshold value, determine the plurality of second media segments included in the third media segment as the first media segment.

In some embodiments, the plurality of second media segments includes a plurality of video segments and an audio segment corresponding to each of the plurality of video segments. The determination module is configured to: determine, from the plurality of video segments, an alternative video segment with the content indicated by the search information; determine whether the audio segment corresponding to the alternative video segment has the content indicated by the search information; and in response to the audio segment corresponding to the alternative video segment having the content indicated by the search information, determine the alternative video segment as the first media segment.

According to a third aspect of the embodiments of the present disclosure, a terminal device is provided. The terminal device includes: a processor; and a memory for storing a computer program or instructions. The processor executes the computer program or instructions to implement the steps of the method described in the first aspect above.

According to a fourth aspect of the embodiments of the present disclosure, a non-transitory computer-readable storage medium is provided, storing executable instructions or a computer program. When the computer program or the instructions in the storage medium is/are executed by a processor, the steps of the method described in the first aspect above are implemented.

According to a fifth aspect of the embodiments of the present disclosure, a computer program product is provided, including a computer program or instructions. When the computer program or instructions is/are executed by a processor, the steps of the method described in the first aspect above are implemented.

The technical solution provided by the embodiments of the present disclosure may include the following beneficial effects.

In the present disclosure, since the terminal device displays a progress bar segment with a preset mark when displaying the play interface for the second multimedia resource, the progress bar segment may indicate the start and end play time of the media content indicated by the search information in the second multimedia resource. In view of above, the user may know the location in the second multimedia resource of the media content indicated by the search information through the progress bar segment with the preset mark, and then directly play the media segment with the media content indicated by the search information by sliding the slider on the progress bar, without having to play the entire second multimedia resource from the beginning. This helps to shorten the time for the user to watch the required media content.

It should be understood that the above general description and the detailed description below are only examples and explanatory, and cannot limit the present disclosure.

### BRIEF DESCRIPTION OF THE DRAWINGS

The drawings herein are incorporated into the specification and constitute a part of the specification, showing embodiments consistent with the present disclosure, and are used together with the specification to explain the principles of the present disclosure.
Fig. 1 is a schematic diagram of a video play interface according to an example embodiment.
Fig. 2 is a schematic diagram of a music play interface according to an example embodiment.
Fig. 3 is a flow chart of an interface display method according to an example embodiment.
Fig. 4 is a schematic diagram of a file table according to an example embodiment.
Fig. 5 is a schematic diagram of a video play interface according to another example embodiment.
Fig. 6 is a schematic diagram of an audio play interface according to another example embodiment.
Fig. 7 is a schematic diagram of a first interface according to an example embodiment.
Fig. 8 is a schematic diagram of a second interface according to an example embodiment.
Fig. 9 is a schematic diagram of a third interface according to an example embodiment.
Fig. 10 is a schematic diagram of a vector table according to an example embodiment.
Fig. 11 is a block diagram of an interface display apparatus according to an example embodiment.
Fig. 12 is a structural block diagram of a terminal device according to an example embodiment.

### DETAILED DESCRIPTION OF THE EMBODIMENTS

Here, example embodiments will be described in detail, and examples thereof are shown in the accompanying drawings. When the following description refers to the drawings, unless otherwise indicated, the same numbers in different drawings represent the same or similar elements. The implementations described in the following example embodiments do not represent all the embodiments consistent with the present disclosure. Instead, they are only examples of apparatuses and methods consistent with some aspects of the present disclosure as detailed in the attached claims.

With the popularity of self-media, the number of multimedia resources such as videos and music that may be played on various applications is rising rapidly. In view of this, a user may search for a plurality of related audio and/or videos by inputting a search term in the search box of the application, while some audio and/or videos may have only a small number of clips related to the search term. At this time, if the user searches for clips related to the search term by watching the entire audio and/or video, a lot of time will be wasted.

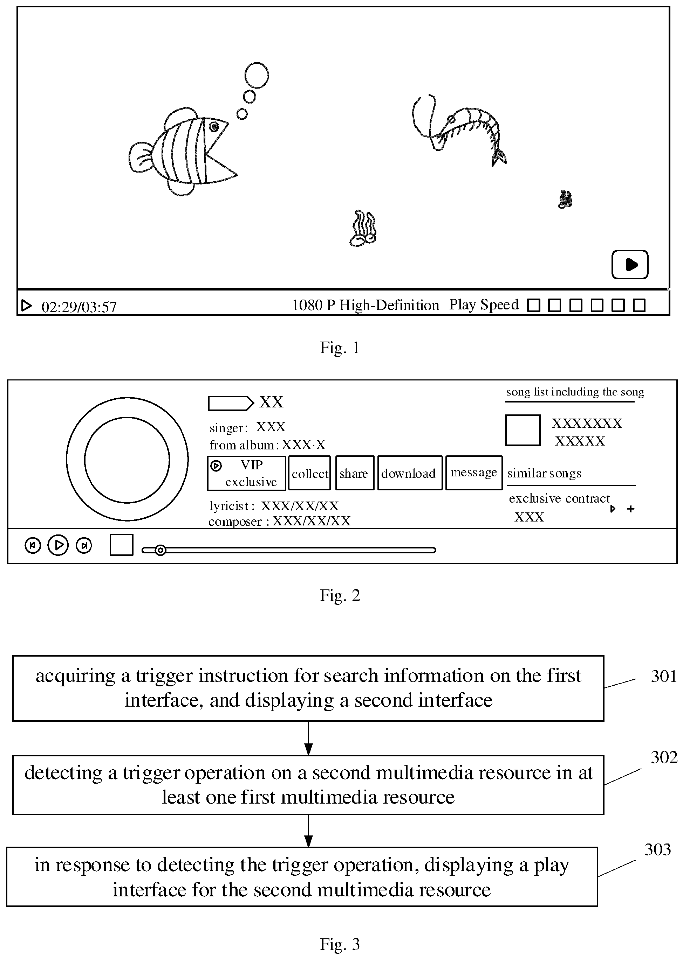

For example, Fig. 1 is a schematic diagram of a video play interface shown according to an example embodiment, and Fig. 2 is a schematic diagram of a music play interface shown according to an example embodiment. Fig. 1 is a play interface of a video searched by a user through the search term "sunset". If the user wants to watch the scene related to sunset in the video, he needs to watch the video from the beginning to find the scene related to sunset. Fig. 2 is a schematic diagram of the play interface of the music searched by the user through the search term "sunset". If the user wants to listen to the audio segment related to sunset in the searched music, he also needs to listen to the music from the beginning and find the audio segment related to sunset. However, whether watching the entire video from the beginning or listening to the entire music from the beginning, it takes a lot of time for the user.

To solve the above problems, an embodiment of the present disclosure provides an interface display method. Fig. 3 is a flow diagram of an interface display method shown according to an example embodiment. The interface display method provided by the embodiments of the present disclosure is performed by a terminal device having a screen. For example, the terminal device may include a mobile terminal and a fixed terminal. The mobile terminal may include a tablet computer, a laptop computer, a car terminal, etc. The fixed terminal may include a desktop computer, an all-in-one computer, etc.

In the following, the terminal device will be used as the execution subject. The interface display method provided by the embodiments of the present disclosure will be introduced with reference to the steps shown in Fig. 3. The interface display method mainly includes the following steps.

In step 301, a trigger instruction for search information on the first interface is acquired, and a second interface is displayed.

It can be understood that the terminal device may display the first interface. When displaying the first interface, the search information input by the user and the trigger instruction for the search information are detected. If the terminal device detects the trigger instruction for the search information, it may search for at least one multimedia resource related to the search information, and use the acquired multimedia resource as the first multimedia resource. After that, the terminal device may display the acquired first multimedia resource on the second interface.

In some embodiments, the search information acquired by the terminal device may be input by the user.

In some embodiments, the search information input by the user may be search information in text form, search information in voice form, etc. The embodiments of the present disclosure do not limit the presentation form of the search information.

For example, the search information input by the user may be a voice, one or more terms (search terms), a paragraph of texts, etc.

For example, the search information may be the search terms "sunset" and "soundtrack", etc.

In some embodiments, after acquiring the trigger instruction for the search information, the terminal device may search for at least one first multimedia resource related to the search information from the local multimedia library.

In some embodiments, after acquiring the trigger instruction for the search information, the terminal device may also send the search information to the server device, so that the server device can determine at least one first multimedia resource related to the search information from the stored multimedia resource(s).

In some embodiments, the search information may also carry attribute information and content information. In view of above, the terminal device may first search for multimedia resources with attributes indicated by the attribute information carried in the search information, and determine the obtained multimedia resources as the fourth multimedia resources. Afterwards, the terminal device may determine, from the fourth multimedia resources, at least one first multimedia resource with the content indicated by the content information carried by the search information.

In some embodiments, the attribute information includes, but is not limited to: the creation time of the multimedia resource, the size of the multimedia resource, the authority of the multimedia resource, the type of the multimedia resource, etc.

For example, the authority of the multimedia resource may be the authority of the application that can play the multimedia resource, the authority of the account that can play the multimedia resource, etc.

For example, the search information obtained by the terminal device is "videos related to sunset and having a file size less than 5M". "File size less than 5M" and "video" are attribute information carried in the search information. In view of this, the terminal device may first search for the video resource with a file size less than 5M from the local multimedia library, and use the found video resource as the fourth multimedia resource.

In some embodiments, the terminal device may also store a file table, and the file table stores the correspondence between the resource identifier of the multimedia resource and the attribute of the multimedia resource.

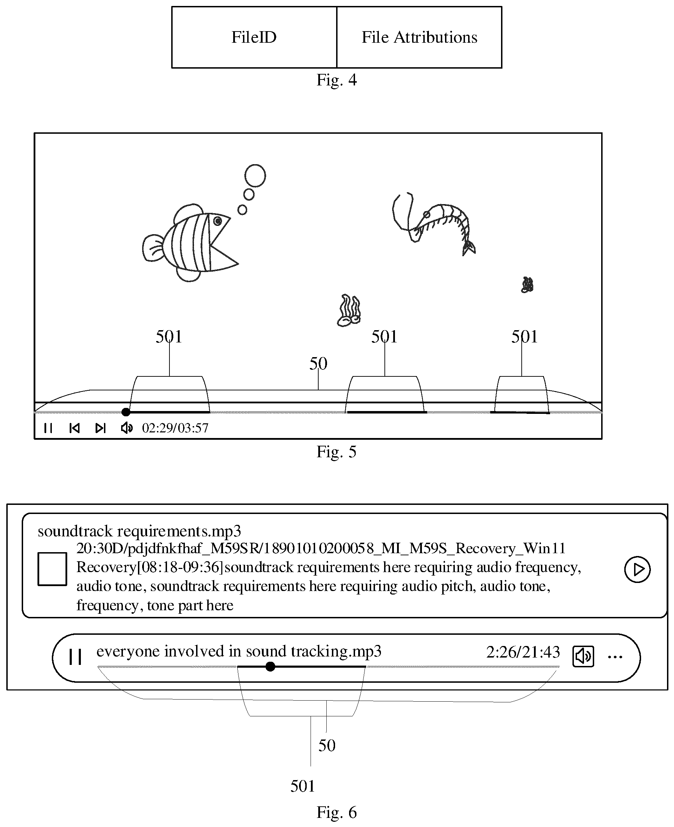

Fig. 4 is a schematic diagram of a file table according to an example embodiment. "FileID" in Fig. 4 represents the resource identifier of the multimedia resource, and "File Attributions" represents the attribute information of the multimedia resource.

In some embodiments, after acquiring at least one first multimedia resource, the terminal device displays at least one first multimedia resource on the second interface, which may be displaying the resource identifier of the first multimedia resource.

For example, the resource identifier includes, but is not limited to: the file name of the first multimedia resource, the cover of the first multimedia resource, the to-be-played interface of the first multimedia resource, etc.

For example, a resource list may be displayed on the second interface, and the resource list includes the resource identifier of at least one first multimedia resource.

In some embodiments, the first multimedia resource included in the second interface may be the first multimedia resource having the first match degree greater than a third threshold with the search information. In view of above, the user may determine the second multimedia resource from the first multimedia resource having the first match degree greater than the third threshold. This can increase the probability that the second multimedia resource selected by the user's trigger operation is the multimedia resource required by the user.

In some embodiments, the size of the third threshold may be set as needed, and the embodiments of the present disclosure are not limited to this.

For example, the third threshold may be any value greater than 50%.

In some embodiments, the first multimedia resource includes, but is not limited to: video resource, audio resource, etc.

In step 302, a trigger operation on a second multimedia resource in at least one first multimedia resource is detected.

It can be understood that when the terminal device displays a second interface including at least one first multimedia resource, it may detect the trigger operation by the user on the first multimedia resource displayed on the second interface. In view of this, if the terminal device detects the trigger operation by the user on any first multimedia resource on the second interface, the first multimedia resource selected by the trigger operation of the user may be determined as the second multimedia resource.

In some embodiments, the trigger operation includes, but is not limited to: click operation, slide operation, etc.

In some embodiments, the trigger operation on any first multimedia resource on the second interface includes a trigger operation on the resource identifier of the first multimedia resource.

In step 303, in response to detecting the trigger operation, the play interface for the second multimedia resource is displayed.

In some embodiments, the play interface includes a progress bar segment with a preset mark, and the progress bar segment is used to indicate the start and end play time of the media content indicated by the search information in the second multimedia resource.

It can be understood that if the terminal device detects the trigger operation by the user on the second media resource, the play interface for the second multimedia resource may be displayed. The play interface for the second multimedia resource also has a progress bar corresponding to the second multimedia resource. In view of this, the terminal device may also mark, by a preset mark, the progress bar segment on the progress bar for indicating the media content indicated by the search information, so that the start and end play time of the media content indicated by the search information can be indicated by the progress bar segment with the preset mark.

In some embodiments, the preset mark includes, but is not limited to: color mark, graphic mark, etc.

For example, the terminal device may display the progress bar segment with the media content indicated by the search information in a color different from the color of the entire progress bar.

Fig. 5 is a schematic diagram of a video play interface shown according to another example embodiment. Fig. 5 is a schematic diagram of a play interface of a target video obtained by searching based on the search term "sunset". In the play interface shown by Fig. 5, the progress bar segment 501 on the progress bar 50 is a progress bar segment corresponding to the video content having a sunset picture.

Fig. 6 is a schematic diagram of an audio play interface according to another example embodiment. Fig. 6 is a schematic diagram of a play interface of a target audio obtained by searching based on the search term "soundtrack". In the play interface shown by Fig. 6, the progress bar segment 501 on the progress bar 50 is a progress bar corresponding to the audio content related to the search term "soundtrack".

It should be noted that the progress bar is not limited to a bar shape, but may also be a ring shape, a pie shape, a fan shape, etc., which is not limited in the embodiments of the present disclosure.

In the embodiments of the present disclosure, since the terminal device may display a progress bar segment with a preset mark when displaying the play interface for the second multimedia resource, the progress bar segment may indicate the start and end play time of the media content indicated by the search information in the second multimedia resource. In view of this, the user may know the position in the second multimedia resource of the media content indicated by the search information through the progress bar segment with the preset mark, and then directly play the media segment with the media content indicated by the search information by sliding the slider on the progress bar, without having to play the entire second multimedia resource from the beginning. This can shorten the time for the user to watch the required media content.

In some embodiments, step 301 includes: in response to the first operation, starting the first interface; and acquiring the trigger instruction for the search information in the first interface.

It can be understood that before displaying the first interface, the terminal device may also detect the first operation of the user, and display the first interface when the first operation of the user is detected. After displaying the first interface, the terminal device may acquire the trigger instruction for the search information.

In some embodiments, the first interface may be an application interface in the target application or an application interface in the target applet. In view of above, when the terminal device detects the trigger operation on the application image of the target application or the image of the target applet, it determines that the first operation is detected.

In some embodiments, the target application may be any application installed on the terminal device, and the target applet may be any applet installed on the terminal device, which is not limited in the embodiments of the present disclosure.

In some embodiments, the first interface may be a search interface of the target application or the target applet. In view of this, acquiring the trigger instruction for the search information may be understood as acquiring the search information input in the search interface and the search operation triggered by the user or automatically triggered.

In some embodiments, the first interface includes a search box; and acquiring the trigger instruction for the search information in the first interface includes: receiving the search information input by the user on the search box, and detecting the trigger instruction for the search information.

It can be understood that the first interface may also include a search box. In view of this, if the user needs to search for multimedia resources, the search information may be input in the search box. In this way, the terminal device may receive the search information input by the user in the search box, and acquire the trigger instruction for the input search information after detecting the search information. If the terminal device acquires the trigger instruction for the search information, the second interface may be displayed.

In some embodiments, the search box may include an input box and a third control associated with the input box. The input box is used for the user to input the search information, and the third control is used for the user to trigger the search for multimedia resources related to the search information. In view of this, after the terminal device receives the search information input by the user in the input box, and if the trigger operation for the third control is detected, it may be determined that the trigger instruction for the search information is acquired.

In some embodiments, the terminal device may also automatically generate the trigger instruction for the search information after the user inputs the search information in the input box.

It should be noted that the shape of the input box displayed on the first interface may be a strip, an ellipse, etc., and the embodiments of the present disclosure are not limited in this regard.

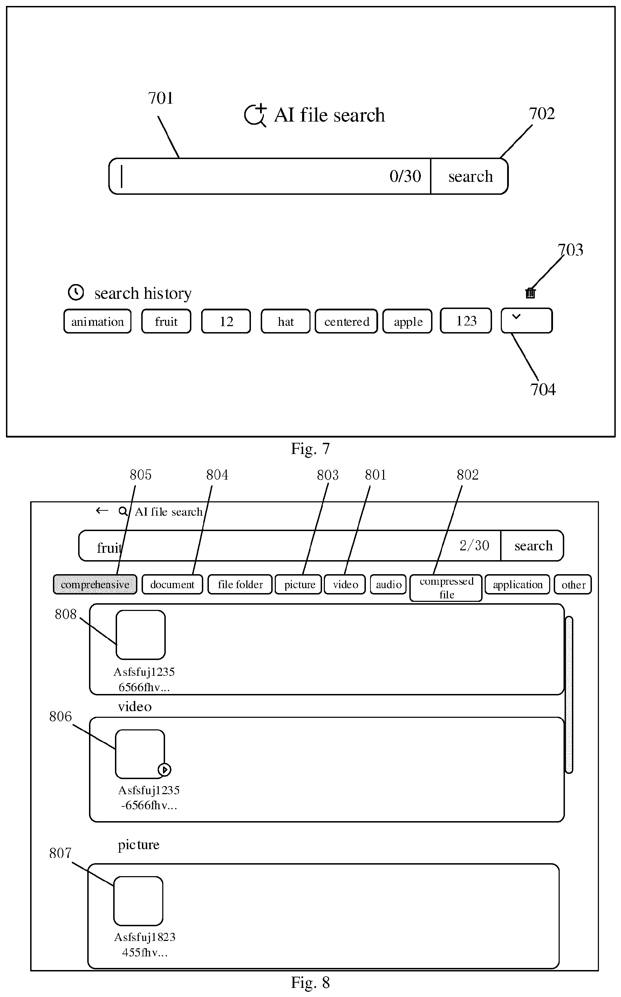

Fig. 7 is a schematic diagram of a first interface shown according to an example embodiment. As shown in Fig. 7, the first interface may be the interface shown in Fig. 7. The first interface includes an input box 701 and a third control 702.

In some embodiments, the first interface may also include a fourth control associated with the input box. The fourth control is used for the user to collect the audio search information based on the audio collection component of the terminal device.

In some embodiments, the first interface includes historical search information, and acquiring the trigger instruction for the search information in the first interface includes: in response to the trigger operation by the user on the historical search information, using the historical search information as the trigger instruction.

It can be understood that the first interface may also include historical search information. The historical search information may be understood as the search information input by the user in the search box at a historical time. In view of this, the terminal device may also detect the trigger operation by the user on the historical search information when displaying the first interface. If the terminal device detects the trigger operation for any historical search information, the historical search information triggered by the trigger operation of the user may be acting as the search information to be used for searching the first media resource, and the trigger instruction for the search information is determined.

In some embodiments, the first interface may have a preset number of historical search information. The historical search information may be the search information input by the user in the search box during a preset time period before the current moment.

In some embodiments, the specific value of the preset number may be set as needed, and the embodiments of the present disclosure are not limited in this regard. For example, the preset number may be 1, 3, 5, 10, etc.

In some embodiments, the number of historical search information received by the terminal device from the search box during a preset time period before the current moment is greater than the preset number. The terminal device may also acquire the number of times the user has input various historical search information, and display the preset number of historical search information with a large number of input times on the first interface.

In some embodiments, the historical search information on the first interface may also be the search information input by the user in the search box one or more times recently.

In some embodiments, the terminal device may also update the search information on the first interface after receiving new search information from the search box, so that the search information input by the user most recently can be displayed on the first interface.

In some embodiments, if the terminal device detects the trigger operation by the user on the first historical search information, it may determine that the trigger instruction for the search information is acquired, search for the first multimedia resource related to the first historical search information, and display at least one first multimedia resource related to the first historical search information.

In some embodiments, the first interface may also include a fifth control, where the fifth control is used for the user to delete at least some of the historical search information on the first interface. For example, the fifth control may be the fifth control 703 in Fig. 7.

In some embodiments, the first interface may also include a sixth control, where the sixth control is used for the user to hide some of the historical search information on the first interface or display all the historical search information.

For example, the sixth control may be the sixth control 704 in Fig. 7.

In some embodiments, the second interface includes a plurality of first controls, where different first controls correspond to different types of multimedia resources. The method further includes: in response to triggering the target first control, displaying the third interface, where the third interface includes at least one third multimedia resource corresponding to the type of the target first control, and the at least one third multimedia resource includes the first multimedia resource of the type corresponding to the target first control in the first multimedia resource. Step 302 includes: detecting the trigger operation for the second multimedia resource in the at least one third multimedia resource.

It can be understood that the second interface may include a plurality of first controls, where different first controls may be used to control the display of at least one third multimedia resource of different types on the third interface. The at least one third multimedia resource displayed on the third interface may include the first multimedia resource of a type corresponding to the target first control in the first multimedia resources. In view of this, when the terminal device displays the third interface including at least one third multimedia resource, it may also detect the trigger operation by the user on any third multimedia resource in the at least one third multimedia resource, and use the third multimedia resource selected by the trigger operation of the user as the second multimedia resource.

In some embodiments, the plurality of first controls includes, but is not limited to: a first control corresponding to the multimedia resource of a video type, a first control corresponding to the multimedia resource of an audio type, a first control corresponding to the multimedia resource of a picture type, etc.

For example, Fig. 8 is a schematic diagram of a second interface shown according to an example embodiment. The display area located below the search box in Fig. 8 is the display area of the first control. As shown in Fig. 8 , the control 801 with the text "video" is the first control corresponding to the multimedia resource of the video type, the control 502 with the text "audio" is the first control corresponding to the multimedia resource of the audio type, the control 803 with the text "picture" is the first control corresponding to the multimedia resource of the picture type, and the control 804 with the text "document" is the first control corresponding to the multimedia resource of the document type. In addition, the types of multimedia resources corresponding to other first controls in Fig. 8 may be understood by referring to the texts on the controls, and the embodiments of the present disclosure are not described one by one here.

For example, based on the second interface shown by Fig. 8, if the terminal device detects the trigger operation by the user on the control with the text "video", the video resources related to the search information may be displayed on the third interface. The video resources displayed on the third interface include the video resources included in the second interface.

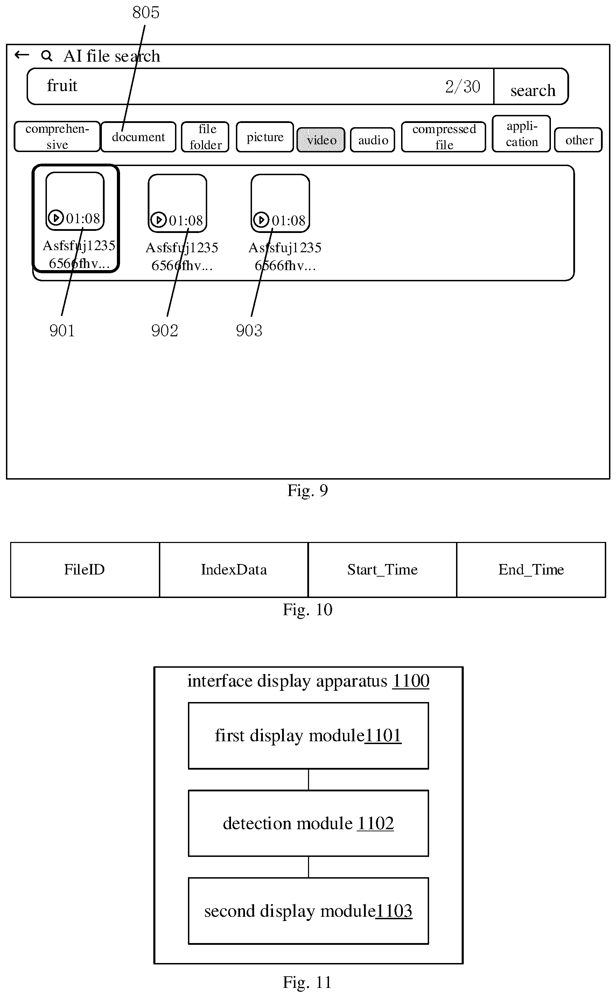

Fig. 9 is a schematic diagram of a third interface according to an example embodiment. As shown in Fig. 9, when the first control triggered by the user is a control with the text "video", the multimedia resources displayed on the third interface are video resources 901, video resources 902, and video resources 903 related to the search term "fruit".

It should be noted that both the second interface and the third interface may include a search box, so that the user can search for the required multimedia resources on the second interface and the third interface.

In some embodiments, the third interface may also include a plurality of first controls, so that the user can switch between the types of media resources displayed on the third interface.

For example, when the third multimedia resource displayed on the third interface is a multimedia resource of the video type, and if the terminal device detects the trigger operation on the first control corresponding to the multimedia resource of the audio type, the third multimedia resource displayed on the third interface may be updated to the multimedia resource of the audio type related to the search information.

In some embodiments, both the second interface and the third interface may also include a second control. The second control may be a control corresponding to a plurality of types of multimedia resources. For example, the second control displayed on the second interface and the third interface may be the control 805 with the text "comprehensive" in Figs. 8 and 9. In view of this, if the terminal device detects the trigger operation by the user on the second control, all types of multimedia resources related to the search information may be displayed.

In some embodiments, the terminal device may display the first control and the second control with the first display parameter when the user does not trigger the first control or the second control, and display the first control or the second control triggered by the user with the second display parameter when the trigger operation on any of the first control or the second control is detected. The first display parameter and the second display parameter are different.

In some embodiments, the second interface includes a plurality of first display areas, and different ones of the first display areas are used to display different types of first multimedia resources.

It can be understood that the second interface may include a plurality of first display areas for displaying different types of first multimedia resources. In view of this, after searching for at least one first multimedia resource related to the search information based on the search information input by the user, the terminal device may display the at least one first multimedia resource in the corresponding display area.

In some embodiments, the plurality of first display areas included on the second interface may correspond to the plurality of first controls one by one.

For example, the first display area on the second interface includes, but is not limited to: a display area for a first multimedia resource of the video type, a display area for a first multimedia resource of the audio type, a display area for a first multimedia resource of the picture type, etc. In view of this, when the first multimedia resource related to the search information and searched by the terminal device includes an audio resource and a video resource, the terminal device may display the video resource in the first display area corresponding to the video resource, and display the audio resource in the display area corresponding to the audio resource.

For example, the second interface in Fig. 8 may include a display area 806 for the first multimedia resource of the video type and a display area 807 for multimedia resources of the picture type. The display area 806 displays video resources related to the search information. The display area 807 displays pictures related to the search information.

In some embodiments, the second interface includes a second display area. The second display area is used to display the first multimedia resource, among at least one first multimedia resource, having the highest first match degree with the search information.

It can be understood that the second interface may also include a second display area. In view of this, after searching for at least one first multimedia resource related to the search information, the terminal device may also calculate the first match degree between each first multimedia resource in the at least one first multimedia resource and the search information, and display the first multimedia resource with the highest first match degree in the second display area.

In some embodiments, if the number of at least one first multimedia resource is one, the terminal device may also directly display the first multimedia resource in the second display area.

For example, referring to Fig. 8, the second display area may be the display area 808 in Fig. 8.

In some embodiments, the media content indicated by the search information is at least one second media segment. Before displaying the play interface, the method further includes: acquiring a plurality of second media segments obtained by dividing the second multimedia resource; and determining, from the plurality of second media segments, at least one first media segment having the content indicated by the search information.

It can be understood that the terminal device may divide the second multimedia resource determined by the above step 302 into a plurality of second media segments. Afterwards, the terminal device may determine whether each of the plurality of second media segments has the content indicated by the search information, and determine the second media segment having the content indicated by the search information as the first media segment. At this time, the terminal device may acquire at least one first media segment.

In some embodiments, the terminal device may pre-divide the locally stored multimedia resources into a plurality of media segments. In view of this, after determining the second multimedia resource, the terminal device may determine whether the plurality of second media segments obtained by dividing the second multimedia resource have the content indicated by the search information.

For example, when the second multimedia resource is a target video, the terminal device may divide the target video into a plurality of video segments (second media segments). Afterwards, the terminal device may determine in turn whether the content indicated by the search information exists in each video segment, and use the video segment with the content indicated by the search information as the first media segment.

For example, when the second multimedia resource is a target audio, the terminal device may divide the target audio into a plurality of audio segments (second media segments). Afterwards, the terminal device may determine in turn whether the content indicated by the search information exists in each audio segment, and use the audio segment with the content indicated by the search information as the first media segment.

In some embodiments, the durations of different second media segments in the plurality of second media segments may be the same or different, and the embodiments of the present disclosure are not limited in this regard.

In some embodiments, the duration of each second media segment may be greater than a preset duration.

For example, in the case where the second media segment is a video segment, the size of the preset duration may be any value greater than or equal to the play duration of two adjacent image frames in the video. For example, the preset duration may be any duration from 1 second to 1 minute.

In some embodiments, determining, from a plurality of second media segments, at least one first media segment having the content indicated by the search information includes: calculating the second match degree between each second media segment in the plurality of second media segments and the search information; and determining at least one first media segment from the plurality of second media segments based on the second match degree corresponding to each second media segment.

It can be understood that after acquiring a plurality of second media segments of the second multimedia resource, the terminal device may calculate the second match degree between each second media segment in the plurality of second media segments and the search information, so that the second match degree corresponding to each second media segment is obtained. After obtaining the second match degree corresponding to each second media segment, the terminal device may determine at least one first media segment from the plurality of second media segments based on the second match degree corresponding to each second media segment.

In some embodiments, the terminal device may calculate the similarity between each second media segment and the search information, and use the similarity between each second media segment and the search information as the second match degree corresponding to the second media segment.

For example, the similarity between each second media segment and the search information includes cosine similarity.

In some embodiments, the terminal device may also calculate the distance between each second media segment and the search information, and use the distance between each second media segment and the search information as the second match degree corresponding to the second media segment.

For example, the distance between each second media segment and the search information includes, but is not limited to: Euclidean distance, Manhattan distance, etc.

In some embodiments, the terminal device may use the second media segment having the second match degree greater than the fourth threshold as the first media segment.

It should be noted that the size of the fourth threshold may be set as needed, and the embodiments of the present disclosure are not limited in this regard.

For example, the size of the fourth threshold may be any value between 70% and 90%.

In some embodiments, calculating the second match degree between each second media segment in the plurality of second media segments and the search information includes: vectorizing the search information to obtain a first vector; and calculating the second match degree between the second vector corresponding to each second media segment and the first vector. The second vector corresponding to each second media segment is obtained by vectorizing each second media segment.

It can be understood that the terminal device may also store a plurality of second vectors corresponding to the second multimedia resource. Each second vector in the plurality of second vectors is obtained by the terminal device or the server device performing vectorization processing on a second media segment. In view of this, after obtaining the search information input by the user, the terminal device may also perform vectorization processing on the search information to obtain the first vector. Afterwards, the terminal device may calculate the match degree between the second vector corresponding to each second media segment and the first vector, and use the match degree between the second vector corresponding to each second media segment and the first vector as the second match degree corresponding to the second media segment.

In some embodiments, a vector set corresponding to a plurality of multimedia resources may be stored in the terminal device. The vector set corresponding to each multimedia resource includes a plurality of second vectors, which is obtained by vectorizing the media segments in the multimedia resources. In view of this, the terminal device may determine the vector set corresponding to the second multimedia resource from the vector set corresponding to the plurality of multimedia resources based on the first resource identifier of the second multimedia resource. Afterwards, the terminal device may calculate the second match degree between each second vector in the vector set corresponding to the second multimedia resource and the first vector, and determine the second vector with the second match degree greater than or equal to the fourth threshold as the third vector. Afterwards, the terminal device may search for the second media segment corresponding to the third vector, and determine the second media segment corresponding to the third vector as the first media segment to obtain at least one first media segment.

In some embodiments, both the first vector and the second vector may be embedded vectors.

In some embodiments, if the search information is in a text form, the terminal device may encode the search information through a text encoder in a neural network model, so that a first vector corresponding to the search information is obtained.

For example, the text encoder in the neural network model includes, but is not limited to: a text-encoder in a Contrastive Language-Image Pre-training (CLIP) model, a text-encoder in a Transformer architecture, a text-encoder in a Bootstrapping Language-Image Pre-training (BLIP) model, and the like.

In some embodiments, the search information is in a voice form. The terminal device may first textualize the search information to obtain a text representation of the search information. Afterwards, the terminal device may vectorize the text representation of the search information to obtain a first vector corresponding to the search information.

It should be noted that the implementation process of the terminal device performing vectorization processing on the text information of the search information may refer to the implementation process of the vectorization processing on the search information in the text form, and the embodiments of the present disclosure will not be repeated here.

In some embodiments, the terminal device may calculate the similarity between the second vector corresponding to each second media segment and the first vector, and use the similarity between the second vector corresponding to each second media segment and the first vector as the second match degree corresponding to the second media segment.

For example, the similarity between the second vector corresponding to each second media segment and the first vector may be cosine similarity.

In some embodiments, the terminal device may also calculate the distance between the second vector corresponding to each second media segment and the first vector, and use the distance between the second vector corresponding to each second media segment and the first vector as the second match degree corresponding to the second media segment.

For example, the distance between the second vector corresponding to each second media segment and the first vector includes, but is not limited to: Euclidean distance, Manhattan distance, etc.

In some embodiments, the plurality of vector sets stored in the terminal device may be a plurality of vector tables. The vector table includes a resource identifier of each multimedia resource, a second vector corresponding to each media segment in each multimedia resource, and a start play time and an end play time of each media segment. In view of this, the terminal device may determine, from a plurality of vector tables, the second vector corresponding to each second media segment in the second multimedia resource based on the first resource identifier of the second multimedia resource. After that, the terminal device may calculate the second match degree between the second vector corresponding to each second media segment and the first vector, and determine the second vector with the second match degree greater than the first threshold as the third vector. After determining the third vector, the terminal device may determine the second media segment corresponding to the third vector as the first media segment, and determine the start play time and the end play time of the corresponding first media segment based on the start play time and the end play time corresponding to each third vector recorded in the vector table.

In some embodiments, the terminal device may determine the start play time and the end play time of each second media segment based on the timestamp on the image included in each second media segment.

For example, in the case where the second multimedia resource is a video, a vector table of the target video may be stored in the terminal device. The vector table of the target video includes the first video identifier of the target video, the second vector corresponding to each video segment in the plurality of video segments obtained by dividing the target video, and the start play time and the end play time of each video segment. In view of this, after determining that the second multimedia resource is the target video, the terminal device may determine the second vector corresponding to each video segment from the vector table based on the first video identifier of the target video. Afterwards, the terminal device may calculate the second match degree between the second vector corresponding to each video segment and the first vector, and determine the second vector with the second match degree greater than the first threshold as the third vector. After determining the third vector, the terminal device may determine the video segment corresponding to the third vector as the first media segment, and determine the start and end play time of the corresponding video segment based on the start play time and the end play time of each third vector recorded in the vector table.

For example, Fig. 10 is a schematic diagram of a vector table according to an example embodiment. "FileID" in Fig. 10 indicates the resource identifier of the multimedia resource; "IndexData" in Fig. 10 indicates the index of the second vector corresponding to each media segment in the multimedia resource with the resource identifier "FileID"; "Start_Time" in Fig. 10 indicates the start play time of the media segment; and "End_Time" in Fig. 10 is the end play time of the media segment.

In some embodiments, the resource identifier in the above file table is the primary key and is associated with the vector table as a foreign key of the vector table.

In some embodiments, after calculating the second match degree between the second vector corresponding to each second media segment and the first vector, the terminal device may also determine the first match degree between the search information and the second multimedia resource based on the plurality of second match degrees between the second vectors corresponding to the plurality of second media segments and the first vector.

For example, the terminal device may use the average value of the plurality of second match degrees between the second vectors corresponding to the plurality of second media segments and the first vector as the first match degree between the search information and the second multimedia resource.

It should be noted that the calculation method of the first match degree between the search information input by the user and each first multimedia resource in at least one first multimedia resource matching the search information may refer to the calculation method of the first match degree between the search information and the second multimedia resource, and the embodiments of the present disclosure are not limited in this regard.

In the embodiments of the present disclosure, the terminal device calculates the second match degree between the first vector corresponding to the search information and the second vector corresponding to each second media segment, and determines the second media segment corresponding to the second vector with the second match degree greater than the first threshold as the first media segment. The second vector corresponding to each second media segment is obtained by encoding the second media segment. Therefore, each second vector may represent the characteristics of the corresponding second media segment. Similarly, the first vector corresponding to the search information is obtained by encoding the search information. Therefore, the first vector may also represent the characteristics of the search information. In view of this, if the match degree between a second vector and the first vector is greater, it means that the second vector and the first vector contain more common features, and further indicates a higher possibility that the second media segment corresponding to the second vector has the content indicated by the search information. Therefore, by vectorizing the search information and the plurality of second media segments, and determining the first media segment from the plurality of second media segments according to the match degree between the first vector and the second vector corresponding to each second media segment, the probability that the determined first media segment is a media segment having the content indicated by the search information can be then increased.

In some embodiments, the plurality of second media segments is a plurality of video segments, and the second vector is obtained by vectorizing the target image in each of the plurality of video segments.

It can be understood that when the first multimedia resource is a video, the terminal device may divide each video into a plurality of video segments and determine one or more target image frames from each video segment. Afterwards, the terminal device may vectorize the target image determined from each video segment to obtain the second vector corresponding to each video segment. In view of this, when the terminal device determines that the second multimedia resource is a target video, it may obtain the second vector corresponding to each of the plurality of video segments included in the target video.

In the following, taking the video segment in the target video as an example, the implementation for obtaining the second vector corresponding to the video segment is introduced.

In some embodiments, the terminal device may extract a valid image from each video segment and determine the obtained valid image as a target image. The valid image may be an image frame containing complete image information in the video segment.

In some embodiments, the terminal device may determine the first frame image in each video segment as the target image.

In some embodiments, the terminal device may decode the target video to extract the target image from each video segment of the target video.

For example, the terminal device may decode the target video through a multimedia processing framework (FFmpeg) to extract the target image from each video segment of the target video.

In some embodiments, the terminal device may encode the target image extracted from each video segment through an image encoder in a neural network model, so that a second vector corresponding to each video segment is obtained.

For example, the text encoder in the neural network model includes, but is not limited to: an image encoder (image) in a CLIP model, an image encoder in an Autoencoder model, an image encoder in a Variational Autoencoder (VAE) model, etc.

In some embodiments, after obtaining the second vector corresponding to each video segment in the target video, the terminal device may store the index of the second vector corresponding to each video segment, the first video identifier of the target video, and the start play time and the end play time of each video segment accordingly to obtain the vector table shown in Fig. 6.

It should be noted that the above process for vectorizing the video segment to obtain the second vector corresponding to each video segment may also be performed by the server device.

In some embodiments, the plurality of second media segments is a plurality of audio segments. The second vector is obtained by vectorizing the text representation of the plurality of audio segments. The text representation of the audio segment is obtained by textualizing the audio segment.

It can be understood that when the first multimedia resource is audio, the terminal device may divide each audio into a plurality of audio segments. After that, the terminal device may perform textualization processing on each audio segment to obtain a text representation of each audio segment. After obtaining the text representation of each audio segment, the terminal device may perform vectorization processing on the text representation of each audio segment, so that a second vector corresponding to each audio segment is obtained. In view of this, when the terminal device determines that the second multimedia resource is the target audio, it may obtain the second vector corresponding to each audio segment in the target audio.

Hereinafter, taking the audio segment in the target audio as an example, the implementation for obtaining the second vector corresponding to the audio segment is introduced.

In some embodiments, the terminal device may perform frame processing on the target audio through the multimedia processing framework (FFmpeg) architecture to divide the target audio into a plurality of audio segments.

In some embodiments, the terminal device may convert each audio segment into text through an audio processing model, so that a text representation of each audio segment is obtained.

For example, the audio processing model may be an Automatic Speech Recognition (ASR) model. For example, the ASR model includes, but is not limited to: Whisper, DeepSpeech, etc.

In some embodiments, after obtaining the text representation of each audio segment, the terminal device may refer to the above-mentioned method for vectorizing the text representation of the search information to perform vectorization processing on the text representation of the audio segment, and the embodiments of the present disclosure will not be repeated here.

In some embodiments, after obtaining the second vector corresponding to each audio segment, the terminal device may store the index of the second vector corresponding to each audio segment, the first audio identifier of the audio to which the audio segment belongs, the text representation of the audio segment, and the start play time and end play time of the audio segment, so that a vector table of each audio segment in the target audio is obtained.

In some embodiments, the plurality of second media segments is a plurality of audio segments. Calculating the second match degree between each second media segment in the plurality of second media segments and the search information includes: obtaining the search information in a text form; and calculating the second match degree between the text representation of each audio segment in the plurality of audio segments and the search information in the text form. The text representation of each audio segment is obtained by textualizing each audio segment.

It can be understood from the above introduction that in the case where the plurality of second media segments is a plurality of audio segments, the terminal device may convert each audio segment into text, so that the text representation of each audio segment is obtained. In view of this, after obtaining the search information, the terminal device may determine whether the search information is in the text form. If the search information is in the text form, the terminal device may directly calculate the second match degree between the search information in the text form and the text representation of each audio segment. If the search information is not in the text form, the terminal device may first convert the search information into the text form. After that, the second match degree between the text representation of each audio segment and the search information in the text form is calculated.

In some embodiments, the terminal device may calculate the match degree between the text representation of each audio segment and the search information in the text form through the BM25 algorithm, TF-IDF algorithm, etc., and use the obtained match degree as the second match degree corresponding to each audio segment.

In some embodiments, the terminal device may also determine the audio segment with the search information based on the text representation of each audio segment, and determine the audio segment with the search information as the target audio segment, so as to obtain at least one target audio segment.

For example, in the case where the search information is the first search term, the terminal device may determine the audio segment with the first search term in the text representation as the target audio segment.

In some embodiments, the terminal device may determine the target audio segment as the first media segment.

In some embodiments, the terminal device may calculate the second match degree between the text representation of each target audio segment and the search information in the text form through the BM25 algorithm, so that the second match degree corresponding to each target audio segment is obtained.

In some embodiments, after obtaining the text representation of each audio segment in the target audio segment, the terminal device may build a search table for the target audio. The search table stores a plurality of terms obtained by segmenting the text representation of each audio segment, the segment identifier of the audio segment to which the term belongs, the text representation of the audio segment, the audio identifier of the audio segment to which the audio belongs, the start play time of the audio segment, the end play time of the audio segment, etc. In view of this, after obtaining the first search term (search information in the text form), the terminal device may search for the first search term in the search table corresponding to the target audio. If the terminal device also finds the first search term in the search table, it may further determine the audio segment to which the first search term in the search table belongs, and determine the audio segment to which the first search term belongs as the target audio segment. Afterwards, the terminal device may calculate the match degree between the text representation of the target audio segment to which the search term belongs and the search term through the BM25 algorithm, and use the obtained match degree as the second match degree corresponding to the target audio segment.

For example, if the search term input by the user is "sunset", the terminal device may search for the term "sunset" in the terms stored in the search table. If the terminal device finds the term "sunset" in the search table, it may further determine the target audio segment to which the sunset belongs. If the terminal device determines that the target audio segment to which the term "sunset" belongs is the third audio segment and the fifth audio segment, the terminal device may calculate the match degree between the text representation of the third audio segment and the search term "sunset" through the BM25 algorithm, and use the obtained match degree as the second match degree corresponding to the third audio segment. The terminal device may also calculate the match degree between the text representation of the fifth audio segment and the search term "sunset", and use the obtained match degree as the second match degree corresponding to the fifth audio segment.

In some embodiments, after obtaining the second match degree corresponding to each target audio segment, the terminal device may determine the target audio segment with the second match degree greater than the fourth threshold as the first media segment.

In some embodiments, the terminal device may determine that the second match degree for the audio segment, other than the target audio segment, in the plurality of audio segments is 0.

In some embodiments, determining, from a plurality of second media segments, at least one first media segment having content indicated by the search information includes: determining, among the plurality of second media segments, multiple adjacent second media segments with the similarity greater than a first threshold value as a third media segment; and calculating a third match degree between the first vector and a second vector corresponding to a second media segment included in the third media segment, where the first vector is obtained by vectorizing the search information. In response to the third match degree being greater than or equal to the second threshold, all the plurality of second media segments included in the third media segment is determined as the first media segment.

It can be understood that after obtaining the second vector corresponding to each second media segment among the plurality of second media segments, the terminal device may also calculate the similarity between the second media segments based on the second vector corresponding to each second media segment, and divide multiple adjacent second media segments with the similarity greater than the first threshold into a third media segment. Afterwards, the terminal device may calculate the third match degree between the first vector and the second vector corresponding to a second media segment included in each third media segment, so that the third match degree corresponding to each third media segment is obtained. Afterwards, the terminal device may compare the third match degree corresponding to each third media segment with the second threshold. If the third match degree corresponding to a third media segment is greater than the second threshold, the terminal device may determine all the second media segments included in the third media segment as the first media segment.

In some embodiments, when the second multimedia resource is divided into N second media segments, the terminal device may sequentially calculate the first similarity between the first second media segment and the subsequent second media segments, until the j-th media segment having the similarity with the first second media segment less than the first threshold is found. At this time, the terminal device may determine the first second media segment to the (j-1)-th second media segment as a third media segment. Afterwards, the terminal device may determine whether j is equal to N. If j is equal to N, it means that the second multimedia resource includes a third media segment (a media segment composed of the first second media segment to the (j-1)-th second media segment) and a second media segment (the j-th second media segment). If j is less than N, the terminal device may continue to calculate the similarity between the j-th second media segment and the subsequent second media segments, until the m-th second media segment having the similarity with the j-th second media segment less than the first threshold is found, or the similarity between the obtained j-th second media segment and the N-th second media segment is greater than the first threshold.

If the similarity between the j-th second media segment and the N-th second media segment is greater than the first threshold, the terminal device may divide the j-th second media segment and the N-th second media segment into a third media segment. If the terminal device finds the m-th second media segment having the similarity with the j-th second media segment less than the first threshold, the j-th second media segment to the (m-1)-th second media segment may be determined as a third media segment. In addition, the terminal device may determine whether m is equal to N. When it is determined that m is equal to N, the division of the third media segment is ended. When m is less than N, it continues to calculate the similarity between the m-th second media segment and the subsequent second media segments, until the division of the second multimedia resource is completed. N is an integer greater than 1, m is an integer less than or equal to N, and j is an integer less than m.

For example, when the second multimedia resource is divided into 10 second media segments, the terminal device may calculate the similarity between the first second media segment and the subsequent second media segments. At this time, if the terminal device determines that the similarity between the 2-nd second media segment, the 3-rd second media segment and the 1-st second media segment is greater than the first threshold, and the similarity between the 4-th second media segment and the 1-st second media segment is less than the first threshold. The terminal device may divide the 1-st second media segment, the 2-nd second media segments and the 3-rd second media segment into a third media segment. Afterwards, the terminal device may calculate the similarity between the 4-th second media segment and the subsequent second media segments. The similarity between the 5-th to 9-th second media segments and the 4-th second media segment is greater than the first threshold, and the similarity between the 10-th second media segment and the 4-th second media segment is less than the first threshold. At this time, the terminal device may divide the 4-th to 9-th second media segments into a third media segment. Based on the above division method, the terminal device may divide the second multimedia resource into 2 third media segments and 1 second media segment.

In some embodiments, when the second multimedia resource includes both the third media segment and the second media segment, the terminal device may calculate the second match degree between the second vector corresponding to a second media segment in each third media segment and the first vector, so that the third match degree corresponding to each third media segment is obtained. The terminal device may also calculate the third match degree between the second vector corresponding to the second media segment and the first vector. Afterwards, the terminal device may use all the second media segments included in the third media segment with the third match degree greater than or equal to the second threshold as the first media segment, and use the second media segment with the third match degree greater than or equal to the fourth threshold as the first media segment.

In some embodiments, the terminal device may calculate the match degree between the second vector corresponding to the first second media segment in each third media segment and the first vector, so that the third match degree corresponding to each third media segment is obtained.

In an embodiment of the present disclosure, the terminal device may divide multiple second media segments with the similarity greater than or equal to the first threshold into a third media segment, and calculate the third match degree between the second vector corresponding to a second media segment in the third media segment and the first vector. If the obtained third match degree is greater than or equal to the second threshold, the terminal device may determine all the second media segments included in the third media segment as the first media segment. This helps to reduce the number of calculations for calculating the match degree between the second vector corresponding to the second media segment and the first vector, thereby improving the efficiency in determining the first media segment from the second multimedia resource.

In some embodiments, the plurality of second media segments includes a plurality of video segments and an audio segment corresponding to each of the plurality of video segments. Determining, from the plurality of second media segments, at least one first media segment having the content indicated by the search information includes: determining, from the plurality of video segments, an alternative video segment having the content indicated by the search information, and determining whether the audio segment corresponding to the alternative video segment has the content indicated by the search information. In response to the audio segment corresponding to the alternative video segment having the content indicated by the search information, determining the alternative video segment as the first media segment.

It can be understood that the second multimedia resource may also include a target video and a target audio corresponding to the target video at the same time. In view of this, the plurality of second media segments may include a plurality of video segments obtained by dividing the target video and an audio segment corresponding to each of the plurality of video segments. In this way, the terminal device may first determine, from the plurality of video segments, the alternative video segment with the content indicated by the search information. After that, the terminal device may determine whether the audio segment corresponding to the alternative video segment has the content indicated by the search information. If the audio segment corresponding to the alternative video segment has the content indicated by the search information, the terminal device may determine the alternative video segment as the first media segment.

It should be noted that the implementation for the terminal device to determine, from the plurality of video segments, the alternative video segment with the content indicated by the search information may refer to the implementation for determining, from the plurality of second media segments, at least one first media segment with the content indicated by the search information, and the embodiments of the present disclosure will not be repeated here.

In an embodiment of the present disclosure, the video usually also has a corresponding soundtrack (audio). After the user inputs a search term, the terminal device does not know whether the user needs to watch the picture related to the search term or listen to the audio related to the search term. Therefore, the terminal device uses the clip with both the video and soundtrack related to the search term as the first media segment. This can increase the probability that the marked first media segment is the media segment required by the user.

Referring to Fig. 11, Fig. 11 is a block diagram of an interface display apparatus according to an example embodiment. As shown in Fig. 11, the interface display apparatus 1100 includes: a first display module 1101, configured to acquire a trigger instruction for search information on the first interface, and display a second interface, the second interface including at least one first multimedia resource related to the search information; a detection module 1102, configured to detect a trigger operation on a second multimedia resource in the at least one first multimedia resource; and a second display module 1103, configured to display a play interface for the second multimedia resource in response to detecting the trigger operation. The play interface includes a progress bar segment with a preset mark, and the progress bar segment is used to indicate the start and end play time of the media content indicated by the search information in the second multimedia resource.

In some embodiments, the first display module 1101 is configured to: start the first interface in response to the first operation; and acquire the trigger instruction for the search information in the first interface.

In some embodiments, the first interface includes a search box, and the first display module 1101 is configured to: receive the search information input by the user on the search box; and acquire the trigger instruction for the search information.

In some embodiments, the first interface includes historical search information, and the first display module 1101 is configured to: in response to the trigger operation by the user on the historical search information, use the historical search information as the trigger instruction.

In some embodiments, the second interface includes a plurality of first controls, where different first controls correspond to different types of multimedia resources. The apparatus also includes: a third display module, configured to display a third interface in response to triggering the target first control, where the third interface includes at least one third multimedia resource of the type corresponding to the target first control, and at least one third multimedia resource includes a first multimedia resource of the type corresponding to the target first control; and a detection module 1102, configured to detect the trigger operation on the second multimedia resource in the at least one third multimedia resource.

In some embodiments, the second interface includes a plurality of first display areas, where different first display areas are used to display different types of first multimedia resources.

In some embodiments, the second interface includes a second display area, where the second display area is used to display the first multimedia resource, among the at least one first multimedia resource, having the highest first match degree with the search information.

In some embodiments, the media content indicated by the search information is at least one second media segment. Before displaying the play interface, the apparatus further includes: an acquisition module, configured to acquire a plurality of second media segments obtained by dividing the second multimedia resource; and a determination module, configured to determine, from the plurality of second media segments, at least one first media segment with the content indicated by the search information.

In some embodiments, the determination module is configured to: calculate the second match degree between each second media segment in the plurality of second media segments and the search information; and determine at least one first media segment from the plurality of second media segments based on the second match degree corresponding to each second media segment.

In some embodiments, the determination module is configured to: vectorize the search information to obtain a first vector; and calculate the second match degree between the second vector corresponding to each second media segment and the first vector. The second vector corresponding to each second media segment is obtained by vectorizing each second media segment.

In some embodiments, the plurality of second media segments is a plurality of video segments, where the second vector is obtained by vectorizing the target image in each of the plurality of video segments.

In some embodiments, the plurality of second media segments is a plurality of audio segments, where the second vector is obtained by vectorizing the text representation of the plurality of audio segments, and the text representation of the audio segment is obtained by textualizing the audio segment.

In some embodiments, the plurality of second media segments is a plurality of audio segments. The determination module is configured to: acquire the search information in a text form; and calculate the second match degree between the text representation of each audio segment in the plurality of audio segments and the search information in the text form. The text representation of each audio segment is obtained by textualizing each audio segment.

In some embodiments, the determination module is configured to: determine, among the plurality of second media segments, multiple adjacent second media segments with the similarity greater than a first threshold as a third media segment; calculate the third match degree between the first vector and the second vector corresponding to a second media segment included in the third media segment, where the first vector is obtained by vectorizing the search information; and in response to the third match degree being greater than or equal to the second threshold, determine all the plurality of second media segments included in the third media segment as the first media segment.

In some embodiments, the plurality of second media segments includes a plurality of video segments and the audio segment corresponding to each of the plurality of video segments. The determination module is configured to: determine, from the plurality of video segments, an alternative video segment having the content indicated by the search information; determine whether the audio segment corresponding to the alternative video segment has the content indicated by the search information; and in response to the audio segment corresponding to the alternative video segment having the content indicated by the search information, determine the alternative video segment as the first media segment.

With regard to the apparatus in the above-mentioned embodiment(s), the specific manner in which each module performs the operation has been described in detail in the method embodiment(s), and will not be described in detail here.

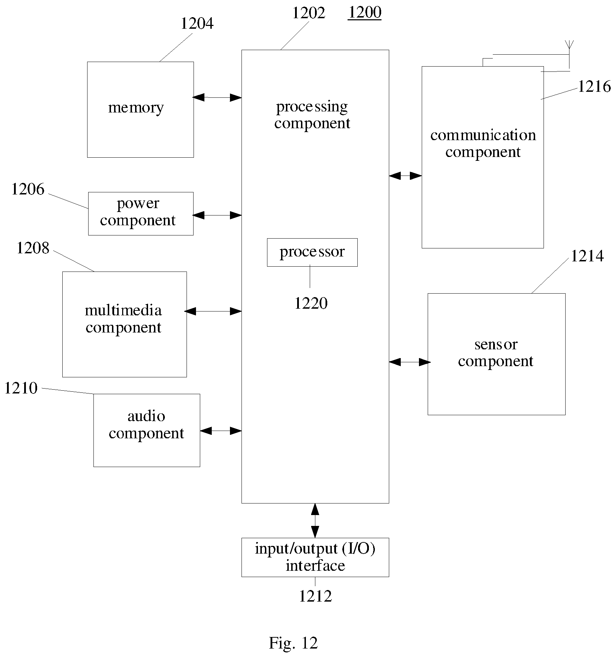

Fig. 12 is a block diagram of a terminal device 1200 according to an example embodiment. For example, the terminal device shown in Fig. 12 may be a wearable device, and the wearable device includes, but is not limited to, a wrist-worn device and a head-worn device. The wrist-worn device may include: a smart watch, a smart bracelet, or other wearable portable electronic devices.

Referring to Fig. 12, the terminal device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 generally controls the overall operation of the terminal device 1200, such as operations associated with at least one of display, phone calls, data communications, camera operations, and recording operations. The processing component 1202 may include one or more processors 1220 to execute instructions to complete all or some of the steps of the above method(s). In addition, the processing component 1202 may include one or more modules to facilitate the interaction between the processing component 1202 and other components. For example, the processing component 1202 may include a multimedia module to facilitate the interaction between the multimedia component 1208 and the processing component 1202.

The memory 1204 is configured to store various types of data to support operations on the terminal device 1200. Examples of such data include at least one of the following: instructions for any application or method operating on the terminal device 1200, contact data, phone book data, messages, pictures, and videos. The memory 1204 may be implemented by any type of volatile or non-volatile storage device or a combination thereof, such as Static Random Access Memory (SRAM), Electrically Erasable Programmable Read Only Memory (EEPROM), Erasable Programmable Read-Only Memory (EPROM), Programmable Read Only Memory (PROM), Read-Only Memory (ROM), magnetic memory, flash memory, magnetic disk, or optical disk.

The power component 1206 provides power to various components of the terminal device 1200. The power component 1206 may include at least one of the following: a power management system, one or more power supplies, and other components associated with generating, managing, and distributing power for the terminal device 1200.

The multimedia component 1208 includes a display screen that provides an output interface between the terminal device 1200 and the user. In some embodiments, the display screen may include a liquid crystal display (LCD) and a touch panel (TP). If the display screen includes a touch panel, the display screen may be implemented as a touch screen to receive input signals from the user. The touch panel includes one or more touch sensors to sense touch, scroll, and gestures on the touch panel. The touch sensor may not only sense the boundary of a touch or scroll action, but also detect the duration and pressure associated with the touch or scroll operation. In some embodiments, the multimedia component 1208 includes a front camera and/or a rear camera. When the terminal device 1200 is in an operation mode, such as a shooting mode or a video mode, the front camera and/or the rear camera may receive external multimedia resources. Each of the front camera and the rear camera may be a fixed optical lens system or has a focal length and optical zoom capability.

The audio component 1210 is configured to output and/or input audio signals. For example, the audio component 1210 includes a microphone (MIC), which is configured to receive external audio signals when the terminal device 1200 is in an operation mode, such as a call mode, a recording mode, and a voice recognition mode. The received audio signal may be further stored in the memory 1204 or sent via the communication component 1216. In some embodiments, the audio component 1210 also includes a speaker for outputting audio signals.

The I/O interface 1212 provides an interface between the processing component 1202 and the peripheral interface module, which may be a keyboard, a click wheel, and buttons. These buttons may include, but are not limited to: a home button, a volume button, a start button, and a lock button.

The sensor component 1214 includes one or more sensors for providing various aspects of status information evaluation for the terminal device 1200. For example, the sensor component 1214 may detect the on/off state information of the terminal device 1200, the relative positioning of the components (such as the display and keypad of the terminal device 1200). The sensor component 1214 may also detect the position change of the terminal device 1200 or a component in the terminal device 1200, the presence or absence of contact between the user and the terminal device 1200, the orientation or acceleration/deceleration of the terminal device 1200, and the temperature change of the terminal device 1200. The sensor component 1214 may include a proximity sensor, configured to detect the presence of nearby objects without any physical contact. The sensor component 1214 may also include an optical sensor, such as a Complementary Metal Oxide Semiconductor (CMOS) or a Charge Coupled Device (CCD) image sensor, for use in imaging applications. In some embodiments, the sensor component 1214 may also include, but is not limited to, at least one of the following: an acceleration sensor, a gyroscope sensor, a magnetic sensor, a pressure sensor, and a temperature sensor.

The communication component 1216 is configured to facilitate the wired or wireless communication between the terminal device 1200 and other devices. The terminal device 1200 may access a wireless network based on a communication standard, such as Wi-Fi, 4G, 5G, or a combination thereof. In an example embodiment, the communication component 1216 receives a broadcast signal or broadcast-related information from an external broadcast management system via a broadcast channel. In an example embodiment, the communication component 1216 also includes a Near Field Communication (NFC) module to facilitate short-range communication. For example, the NFC module may be implemented based on Radio Frequency Identification (RFID) technology, Infrared Data Association (IrDA) technology, Ultra Wide Band (UWB) technology, Bluetooth (BT) technology, and other technologies.

In an example embodiment, the terminal device 1200 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors or other electronic components.

In an example embodiment, a non-transitory computer-readable storage medium including instructions is also provided, such as a memory 1204 including executable instructions or a computer program, which may be executed by a processor 1220 of the terminal device 1200 to complete the above method(s). For example, the non-transitory computer-readable storage medium may be a ROM, a Random Access Memory (RAM), a Compact Disc-Read Only Memory (CD-ROM), a magnetic tape, a floppy disk, an optical data storage device, etc.

A non-transitory computer-readable storage medium is provided. When the instructions in the storage medium are executed by a processor of a terminal device, the terminal device is enabled to perform any one of the above-mentioned interface display methods in the embodiments of the present disclosure.

For example, the method includes: acquiring a trigger instruction for search information on a first interface, and displaying a second interface, where the second interface includes at least one first multimedia resource related to the search information; detecting a trigger operation on a second multimedia resource in the at least one first multimedia resource; and in response to detecting the trigger operation, displaying a play interface for the second multimedia resource. The play interface includes a progress bar segment with a preset mark. The progress bar segment is used to indicate the start and end play time of the media content indicated by the search information in the second multimedia resource.

The embodiments of the present disclosure provide a computer program product. The computer program product includes a computer program or executable instructions. The computer program or the executable instructions is/are stored in a computer-readable storage medium. The processor of the computer device reads the computer program or the executable instructions from the computer-readable storage medium. The processor executes the computer program or the executable instructions, so that the computer device performs any of the above-mentioned interface display methods in the embodiments of the present disclosure.

After considering the specification and practicing the content disclosed herein, those skilled in the art will easily think of other embodiments of the present disclosure. The present disclosure is intended to cover any variation, use or adaptation made to the present disclosure, which follows the general principles of the present disclosure and includes common knowledge or customary technical means in the technical field that are not disclosed in the present disclosure. The description and embodiments are to be regarded as examples only, and the true scope and spirit of the present disclosure are indicated by the claims.

It should be understood that the present disclosure is not limited to the precise structure(s) described above and shown in the drawings, and various modifications and changes may be made without departing from the scope of the present disclosure. The scope of the present disclosure is limited only by the appended claims.

## Claims

1. An interface display method, comprising:
(301) acquiring a trigger instruction for search information on a first interface, and displaying a second interface, wherein the second interface comprises at least one first multimedia resource related to the search information;
detecting (302) a trigger operation on a second multimedia resource in the at least one first multimedia resource; and
in response to detecting the trigger operation, displaying (303) a play interface for the second multimedia resource, wherein the play interface comprises a progress bar segment (501) with a preset mark, and the progress bar segment (501) is used to indicate a start and end play time of a media content indicated by the search information in the second multimedia resource.

2. The method according to claim 1, wherein acquiring the trigger instruction for the search information on the first interface comprises:
in response to a first operation, starting the first interface; and
acquiring the trigger instruction for the search information in the first interface.

3. The method according to claim 1 or 2, wherein
the first interface comprises a search box, and
acquiring the trigger instruction for the search information in the first interface comprises:
receiving the search information input by a user on the search box; and
acquiring the trigger instruction for the search information.

4. The method according to any one of the preceding claims, wherein
the first interface comprises historical search information, and
acquiring the trigger instruction for the search information in the first interface comprises:
in response to the trigger operation by a user on the historical search information, using the historical search information as the trigger instruction.

5. The method according to any one of the preceding claims , wherein
the second interface comprises a plurality of first controls, wherein different first controls correspond to different types of multimedia resources;
the method further comprises:
in response to triggering a target first control, displaying a third interface, wherein the third interface comprises at least one third multimedia resource of a type corresponding to the target first control, and the at least one third multimedia resource comprises the first multimedia resource of the type corresponding to the target first control; and
detecting the trigger operation on the second multimedia resource in the at least one first multimedia resource comprises:
detecting the trigger operation on the second multimedia resource in the at least one third multimedia resource.

6. The method according to any one of the preceding claims , wherein
the second interface comprises a plurality of first display areas, where different first display areas are used to display different types of first multimedia resources; or.
the second interface comprises a second display area, where the second display area is used to display the first multimedia resource, among the at least one first multimedia resource, having a highest first match degree with the search information.

7. The method according to any one of the preceding claims , wherein
the media content indicated by the search information is at least one second media segment; and
before displaying the play interface for the second multimedia resource, the method further comprises:
acquiring a plurality of second media segments obtained by dividing the second multimedia resource; and
determining, from the plurality of second media segments, at least one first media segment with a content indicated by the search information.

8. The method according to claim 7, wherein determining, from the plurality of second media segments, the at least one first media segment with the content indicated by the search information comprises:
calculating a second match degree between each second media segment in the plurality of second media segments and the search information; and
determining the at least one first media segment from the plurality of second media segments based on the second match degree corresponding to each second media segment.

9. The method according to claim 8, wherein calculating the second match degree between each second media segment in the plurality of second media segments and the search information comprises:
vectorizing the search information to obtain a first vector; and
calculating the second match degree between a second vector corresponding to each second media segment and the first vector,
wherein the second vector corresponding to each second media segment is obtained by vectorizing each second media segment.

10. The method according to claim 9, wherein
the plurality of second media segments is a plurality of video segments, where the second vector is obtained by vectorizing a target image in each video segment in the plurality of video segments; or
the plurality of second media segments is a plurality of audio segments, where the second vector is obtained by vectorizing a text representation of the plurality of audio segments, and the text representation of the audio segment is obtained by textualizing the audio segment.

11. The method according to any one of claims 9 to 10, wherein
the plurality of second media segments is a plurality of audio segments; and
calculating the second match degree between each second media segment in the plurality of second media segments and the search information comprises:
acquiring the search information in a text form; and
calculating the second match degree between the text representation of each audio segment in the plurality of audio segments and the search information in the text form,
wherein the text representation of each audio segment is obtained by textualizing each audio segment.

12. The method according to any one of claims 7 to 11, wherein determining, from the plurality of second media segments, the at least one first media segment with the content indicated by the search information comprises:
determining, among the plurality of second media segments, multiple adjacent second media segments with a similarity greater than a first threshold value as a third media segment;
calculating a third match degree between the first vector and a second vector corresponding to a second media segment comprised in the third media segment, wherein the first vector is obtained by vectorizing the search information; and
in response to the third match degree being greater than or equal to a second threshold value, determining all the plurality of second media segments comprised in the third media segment as the first media segment.

13. The method according to any one of claims 7 to 12, wherein
the plurality of second media segments comprises a plurality of video segments and an audio segment corresponding to each video segment in the plurality of video segments; and
determining, from the plurality of second media segments, the at least one first media segment with the content indicated by the search information comprises:
determining, from the plurality of video segments, an alternative video segment with the content indicated by the search information;
determining whether the audio segment corresponding to the alternative video segment has the content indicated by the search information; and
in response to the audio segment corresponding to the alternative video segment having the content indicated by the search information, determining the alternative video segment as the first media segment.

14. An interface display apparatus (1100), comprising:
a first display module (1101), configured to acquire a trigger instruction for search information on a first interface, and display a second interface, wherein the second interface comprises at least one first multimedia resource related to the search information;
a detection module (1102), configured to detect a trigger operation on a second multimedia resource in the at least one first multimedia resource, and
a second display module (1103), configured to display a play interface for the second multimedia resource in response to detecting the trigger operation, wherein the play interface comprises a progress bar segment (501) with a preset mark, and the progress bar segment (501) is used to indicate a start and end play time of a media content indicated by the search information in the second multimedia resource.

15. A non-transitory computer-readable storage medium, wherein
the storage medium stores a computer program or instructions, and
when the computer program or instructions in the storage medium is/are executed by a processor, steps of the method according to any one of claims 1 to 13 are implemented.
